# EUROPEAN PATENT APPLICATION

(11) **EP 4 000 876 A1**
(43) Date of publication of application: **25.05.2022**
(21) Application number: 19957341.1
(22) Date of filing: 24.12.2019
(51) Int. Cl.: B29C 65/32

(54) **FUSION DEVICE AND FUSION METHOD**

(71) Applicant: Mitsubishi Heavy Industries, Ltd., Chiyoda-ku, Tokyo 100-8332 (JP)
(72) Inventor: SAITO, Satoru, Tokyo 100-8332 (JP); YAMAGUCHI, Eizaburo, Tokyo 100-8332 (JP)
(74) Representative: Hoffmann Eitle
(86) International application number: PCT/JP2019/050668
(87) International publication number: WO 2021/130866

(57) **Abstract**

Provided is a fusion device (100) comprising: an inductive coil (10) in which a first composite material (200) and a second composite material (300), which each contain conductive reinforcement fibers and thermoplastic resin, are fused, and which generates a current in the reinforcement fibers arranged to be close to the first composite material (200) and included in the first composite material (200) to heat the first composite material (200), and generates a current in the reinforcement fibers included in the second composite material (300) to heat the second composite material (300); a housing (30) that has a pressure surface (31) disposed between the inductive coil (10) and the first composite material (200) while contacting the first composite material (200); and a cooling unit (20) that cools the pressure surface (31).

## Description

### Technical Field

The present disclosure relates to a fusion device that fuses a first composite material and a second composite material, each of which includes a conductive reinforcement fiber and a thermoplastic resin, with each other and a fusion method.

### Background Art

In the related art, there is known a technique in which a plurality of composite materials including carbon fibers and thermoplastic resins are heated by means of an inductive coil so that the thermoplastic resin is melted and the plurality of composite materials are fused with each other (for example, refer to NPL 1). NPL 1 discloses a technique in which air is jetted to a space between the inductive coil and a surface of a composite material to decrease the temperature of the surface of the composite material and to protect the surface of the composite material close to the inductive coil from damage caused by heat.

### Citation List

### Non Patent Literature

[NPL 1] M.Duhovic et al. "ADVANCED 3D FINITE ELEMENT SIMULATION OF THERMOPLASTIC CARBON FIBER COMPOSITE INDUCTION WELDING" 16th EUROPEAN CONFERENCE ON COMPOSITE MATERIALS, June 2014

### Summary of Invention

### Technical Problem

However, in the case of NPL 1, it is necessary to hold the inductive coil at a position separated from the surface of the composite material in order to cause the air to flow through the space between the inductive coil and the surface of the composite material. In a case where a distance between the surface of the composite material and the inductive coil is large, a magnetic field applied by the inductive coil is weakened in proportion to the distance. Therefore, a current value that is required to increase the temperature of a fusion position where the composite material close to the inductive coil and another composite material are fused with each other to a temperature equal to or higher than the melting point of the thermoplastic resins becomes high, which increases electric power required for fusion.

To appropriately fuse the composite materials, of which the thermoplastic resins have been heated by the inductive coil to a temperature equal to or higher than the melting point thereof, with each other, it is necessary to appropriately pressurize the composite materials to each other with the thermoplastic resins heated to the temperature equal to or higher than the melting point thereof. However, in the case of NPL 1, air is caused to flow through the space between the inductive coil and the surface of the composite material. Therefore, it is not possible to pressurize the composite materials toward the fusion position at a position where the composite materials are heated by the inductive coil. In the case of NPL 1, the composite materials are pressurized by a roller at a position to which the composite materials are transported from a position where the composite materials are heated by the inductive coil. Therefore, the temperature of the thermoplastic resins is decreased to a temperature lower than the temperature thereof at the position where the composite materials are heated by the inductive coil and thus a favorable fusion state may not be achieved.

The present disclosure has been made in view of such circumstances and an object thereof is to provide a fusion device and a fusion method with which it is possible to protect a surface of a composite material close to an inductive coil from damage caused by heat and to achieve an appropriate fusion state without an increase in electric power required for fusion.

### Solution to Problem

According to an aspect of the present disclosure, there is provided a fusion device which fuses a first composite material and a second composite material, each of which includes a conductive reinforcement fiber and a thermoplastic resin, with each other. The fusion device includes an inductive coil that is disposed close to the first composite material, generates an electric current in the reinforcement fiber included in the first composite material to cause the first composite material to generate heat, and generates an electric current in the reinforcement fiber included in the second composite material to cause the second composite material to generate heat, a housing that includes a pressurization surface disposed between the inductive coil and the first composite material in a state of being in contact with the first composite material, and a cooling unit that cools the pressurization surface.

According to an aspect of the present disclosure, there is provided a fusion method of fusing a first composite material and a second composite material, each of which includes a conductive reinforcement fiber and a thermoplastic resin, with each other. The fusion method includes a cooling step of cooling a housing that includes a pressurization surface disposed in a state of being in contact with the first composite material, a pressurizing step of pressurizing the first composite material via the pressurization surface in a state where the pressurization surface is in contact with the first composite material, and a heating step of driving an inductive coil that is disposed with the pressurization surface interposed between the first composite material and the inductive coil, generating an electric current in the reinforcement fiber included in the first composite material to cause the first composite material to generate heat, and generating an electric current in the reinforcement fiber included in the second composite material to heat the second composite material after the pressurization surface is cooled in the cooling step and the first composite material is pressurized in the pressurizing step.

### Advantageous Effects of Invention

According to the aspects of the present disclosure, it is possible to provide a fusion device and a fusion method with which it is possible to protect a surface of a composite material close to an inductive coil from damage caused by heat and to achieve an appropriate fusion state without an increase in electric power required for fusion.

### Brief Description of Drawings

Fig. 1 is a vertical sectional view showing a fusion device according to a first embodiment of the present disclosure.
Fig. 2 is a perspective view showing the fusion device shown in Fig. 1.
Fig. 3 is a vertical sectional view showing a fusion device which is a modification example of the fusion device shown in Fig. 1.
Fig. 4 is a flowchart showing a fusion method according to the first embodiment.
Fig. 5 is a vertical sectional view showing a fusion device according to a second embodiment.
Fig. 6 is a vertical sectional view showing a fusion device according to a third embodiment.
Fig. 7 is a cross-sectional view taken along line I-I which shows the fusion device shown in Fig. 6 as seen along arrows.
Fig. 8 is a vertical sectional view showing a fusion device according to a fourth embodiment.
Fig. 9 is a vertical sectional view showing a modification example of the fusion device shown in Fig. 8.
Fig. 10 is a vertical sectional view showing a fusion device according to a fifth embodiment.
Fig. 11 is a front view showing the fusion device shown in Fig. 10.
Fig. 12 is a view showing the fusion device shown in Fig. 11 as seen from a pressurization surface side. Description of Embodiments

### [First Embodiment]

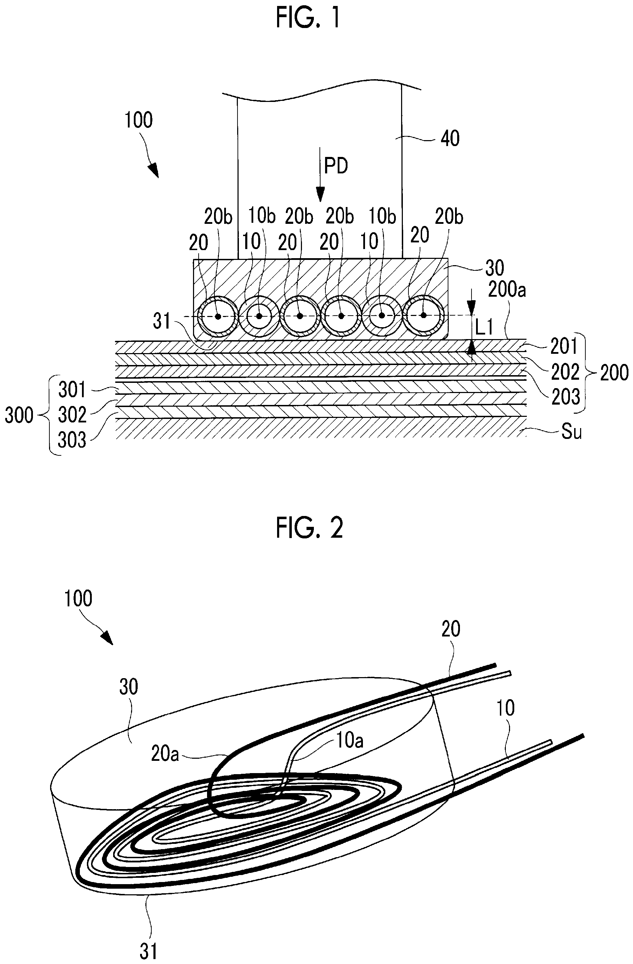

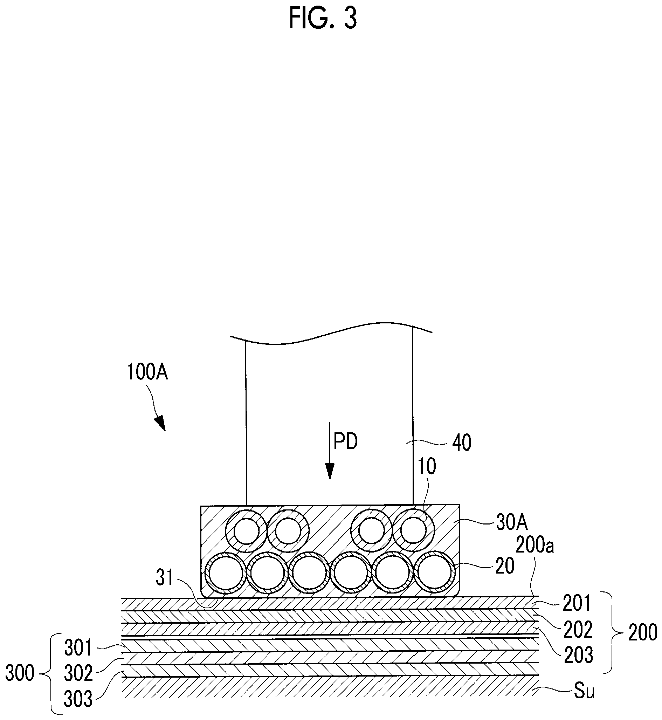

Hereinafter, a fusion device 100 according to a first embodiment of the present disclosure and a fusion method in which the fusion device 100 is used will be described with reference to the drawings. Fig. 1 is a vertical sectional view showing the fusion device 100 according to the first embodiment of the present disclosure. Fig. 2 is a perspective view showing the fusion device 100 shown in Fig. 1. Fig. 3 is a vertical sectional view showing a fusion device 100A which is a modification example of the fusion device 100 shown in Fig. 1.

The fusion device 100 in the present embodiment is a device that fuses a composite material (a first composite material) 200 and a composite material (a second composite material) 300, each of which includes a conductive reinforcement fiber and a thermoplastic resin, with each other. The fusion device 100 generates an electric current in the conductive reinforcement fibers by means of an inductive coil 10 so that the reinforcement fibers generate heat and thermoplastic resins included in the composite material 200 and the composite material 300 are heated to a temperature equal to or higher than the melting point thereof.

As shown in Fig. 1, the composite material 200 is formed in a flat shape by laminating three sheet-shaped composites 201, 202, and 203. Each of the composites 201, 202, and 203 includes a conductive fiber base material (for example, a carbon fiber) and a thermoplastic resin. The composite material 200 is densified in advance by pressurizing the thermoplastic resins to a temperature equal to or higher than the melting point thereof in a state where the three sheet-shaped composites 201, 202, and 203 are laminated in a flat shape and are pressurized.

As shown in Fig. 1, the composite material 300 is formed in a flat shape by laminating three sheet-shaped composites 301, 302, and 303. Each of the composites 301, 302, and 303 includes a conductive fiber base material (for example, a carbon fiber) and a thermoplastic resin. The composite material 300 is densified in advance by pressurizing the thermoplastic resins to a temperature equal to or higher than the melting point thereof in a state where the sheet-shaped composites 301, 302, and 303 are laminated in a flat shape and are pressurized.

In the present embodiment, the composite material 200 obtained by laminating the three composites 201, 202, and 203 and the composite material 300 obtained by laminating the three composites 301, 302, and 303 are used. However, the number of composites may be any number equal to or larger than one.

Examples of the thermoplastic resins included in the composites 201, 202, and 203 and the composites 301, 302, and 303 include polyetheretherketone (PEEK), polyethylene terephthalate (PET), polybutylene terephthalate (PBT), nylon 6 (PA6), nylon 66 (PA66), polyphenylene sulfide (PPS), polyetherimide (PEI), and polyetherketoneketone (PEKK).

As shown in Fig. 1, the fusion device 100 of the present embodiment includes the inductive coil 10, a cooling pipe (a pipe body; a cooling unit) 20, a housing 30, and a pressurizing mechanism 40.

The inductive coil 10 is a device that generates a magnetic force line in the vicinity thereof by means of an alternating current of a predetermined frequency supplied from an alternating power supply (not shown) and generates an electric current in a conductive reinforcement fiber disposed at a nearby position. The inductive coil 10 generates an electric current in a conductive reinforcement fiber such that the reinforcement fiber generates heat and a thermoplastic resin in the vicinity of the reinforcement fiber is heated to a temperature equal to or higher than the melting point thereof.

The inductive coil 10 heats the thermoplastic resin included in the composite 203 to a temperature equal to or higher than the melting point by heating the composite material 200 and heats the thermoplastic resin included in the composite 301 to a temperature equal to or higher than the melting point by heating the composite material 300. Since the composite 203 and the composite 301 are disposed in a state of being in contact with each other, in a case where the thermoplastic resins included in the composites are heated to a temperature equal to or higher than the melting point, the thermoplastic resins are melted and integrated with each other and the composite 203 and the composite 301 are fused with each other.

When the inductive coil 10 heats the composite material 200, the inductive coil 10 may heat not only the thermoplastic resin included in the composite 203 that is in contact with the composite material 300 but also the thermoplastic resin included in the composite 202 adjacent to the composite 203 or the thermoplastic resin included in the composite 201 to a temperature equal to or higher than the melting point thereof. In addition, when the inductive coil 10 heats the composite material 300, the inductive coil 10 may heat not only the thermoplastic resin included in the composite 301 that is in contact with the composite material 200 but also the thermoplastic resin included in the composite 302 adjacent to the composite 301 or the thermoplastic resin included in the composite 303 to a temperature equal to or higher than the melting point thereof. That is, in a case where each of the composite material 200 and the composite material 300 is composed of a plurality of composites, the inductive coil 10 may heat thermoplastic resins included in any number of composites including a composite of the composite material 200 that is in contact with the composite material 300 and a composite of the composite material 300 that is in contact with the composite material 200 to a temperature equal to or higher than the melting point thereof.

The inductive coil 10 is disposed in a state of being fixed to an internal portion of the housing 30. Therefore, in a case where the housing 30 is brought into contact with an upper surface 200a of the composite material 200, the inductive coil 10 enters a state of being disposed close to the composite material 200. As shown in Fig. 2, the inductive coil 10 is disposed to extend around the center of the housing 30 in the vicinity of a pressurization surface 31 of the housing 30.

In a case where the inductive coil 10 is fixed to a lower portion (a position closer to the upper surface 200a than the pressurizing mechanism 40) of the internal portion of the housing 30, electric power required to heat the composite material 200 and the composite material 300 to a temperature equal to or higher than the melting point thereof can be lowered in comparison with a case where the inductive coil 10 is fixed to an upper portion (a position closer to the pressurizing mechanism 40 than the upper surface 200a) of the internal portion of the housing 30. This is because an electric current can be generated in the conductive reinforcement fibers with a smaller amount of electric current since a distance between a position at which the inductive coil 10 is disposed and a position where the composite 203 and the composite 301 are fused with each other is short.

The cooling pipe 20 cools the pressurization surface 31 of the housing 30 and is a pipe body through which a cooling medium (for example, water) flows. The cooling pipe 20 is formed of a resin material such as nylon, silicon, or fluororesin, for example. As shown in Fig. 2, the cooling pipe 20 is disposed in a state of being fixed to the internal portion of the housing 30. Therefore, in a case where the housing 30 is brought into contact with the upper surface 200a of the composite material 200, the cooling pipe 20 enters a state of being disposed close to the composite material 200. As shown in Fig. 2, the cooling pipe 20 is disposed to extend around the center of the housing 30 in the vicinity of the pressurization surface 31 of the housing 30.

In a case where the cooling pipe 20 is fixed to a lower portion (a position closer to the upper surface 200a than the pressurizing mechanism 40) of the internal portion of the housing 30, performance for cooling the upper surface 200a of the composite material 200 via the pressurization surface 31 is improved in comparison with a case where the cooling pipe 20 is fixed to an upper portion (a position closer to the pressurizing mechanism 40 than the upper surface 200a) of the internal portion of the housing 30. This is because heat transfer properties from the cooling pipe 20 to the pressurization surface 31 are improved since a distance between a position at which the cooling pipe 20 is disposed and a position at which the pressurization surface 31 is disposed is short.

In an example shown in Fig. 2, a region 10a of the inductive coil 10 that is guided to an outer side from the center overlaps the inductive coil 10 and the cooling pipe 20 disposed closer to an outer peripheral side than the center and a region 20a of the cooling pipe 20 that is guided to an outer side from the center overlaps the inductive coil 10 and the cooling pipe 20 disposed closer to the outer peripheral side than the center. However, another configuration may also be adopted. For example, a configuration in which the inductive coil 10 and the cooling pipe 20 are disposed on the same plane not to overlap each other may also be adopted.

As shown in Fig. 1, in the case of the fusion device 100 of the present embodiment, both of the inductive coil 10 and the cooling pipe 20 are disposed to be separated from the pressurization surface 31 and the composite material 200 by the same distance. As shown in Fig. 1, a distance from the pressurization surface 31 and the composite material 200 to a position where a central axis 10b of the inductive coil 10 is disposed and is a length L1. In addition, a distance from the pressurization surface 31 and the composite material 200 to a position where a central axis 20b of the cooling pipe 20 is disposed and is the length L1. Accordingly, it is possible to achieve both of the heating performance of the inductive coil 10 heating the composite material 200 and the composite material 300 and the cooling performance of the cooling pipe 20 cooling the upper surface 200a of the composite material 200 via the pressurization surface 31.

Note that the inductive coil 10 and the cooling pipe 20 may be disposed as in a modification example shown in Fig. 3. In a housing 30A that a fusion device 100A according to the modification example shown in Fig. 3 includes, the cooling pipe 20 is disposed closer to the pressurization surface 31 than the inductive coil 10. As shown in Fig. 3, in a case where the pressurization surface 31 is disposed to come into contact with the upper surface 200a of the composite material 200, the cooling pipe 20 is disposed closer to the upper surface 200a of the composite material 200 than the inductive coil 10. Therefore, heat transfer properties from the cooling pipe 20 to the pressurization surface 31 are improved and cooling performance is improved in comparison with a case where the cooling pipe 20 is disposed at an upper portion of the internal portion of the housing 30 (the position closer to the pressurizing mechanism 40 than the upper surface 200a).

In an example shown in Fig. 1, both of the distance from the pressurization surface 31 to the inductive coil 10 and the distance from the pressurization surface 31 to the cooling pipe 20 are the length L1. However, in the case of the modification example shown in Fig. 3, the distance from the pressurization surface 31 to the inductive coil 10 is longer than the distance from the pressurization surface 31 to the cooling pipe 20. Since the inductive coil 10 is not present at the lower portion (the position closer to the upper surface 200a than the pressurizing mechanism 40) of the internal portion of the housing 30, the cooling pipe 20 can be disposed over a wide range at a position close to the pressurization surface 31. Therefore, the cooling performance of the cooling pipe 20 cooling the pressurization surface 31 and the upper surface 200a of the composite material 200 is improved.

The housing 30 is a structure in which the inductive coil 10 and the cooling pipe 20 are disposed and is formed of a block-shaped resin material (for example, a phenol resin). The housing 30 is formed in a block-like shape by disposing the inductive coil 10 and the cooling pipe 20 shown in Fig. 2 in a molding tool (not shown), pouring a resin material heated to be lowered in viscosity into the molding tool, and cooling the molding tool.

As shown in Fig. 1, the housing 30 includes the pressurization surface 31 that is disposed between the inductive coil 10 and the composite material 200 in a state of being in contact with the composite material 200. Since the pressurization surface 31 is disposed between the inductive coil 10 and the composite material 200, a position (a fusion position) where the inductive coil 10 heats the composite material 200 and the composite material 300 can be directly pressurized.

The pressurizing mechanism 40 is a device that pressurizes the fusion device 100, which is disposed above the composite material 200 and the composite material 300 installed on an installation surface Su, along a pressurizing direction PD toward the installation surface Su. The installation surface Su is a surface on which the composite material 200 and the composite material 300 are installed in order to fuse the composite material 200 and the composite material 300 with each other by means of the fusion device 100. The pressurizing mechanism 40 can switch between a pressurization state shown in Fig. 1 in which the pressurizing mechanism 40 is in contact with the housing 30 and a non-pressurization state in which the pressurizing mechanism 40 is separated from the housing 30.

It is possible to fuse the composite material 200 and the composite material 300 with each other in a state where the composite material 200 and the composite material 300 are in close contact with each other by causing the inductive coil 10 to heat the composite material 200 and the composite material 300 with the pressurizing mechanism 40 performing pressurization. In addition, it is possible to maintain a state where the composite material 200 and the composite material 300 are densified by causing the pressurizing mechanism 40 to continuously perform the pressurization when the composite material 200 and the composite material 300 are cooled from a temperature equal to or higher than the melting point thereof to a temperature lower than the melting point.

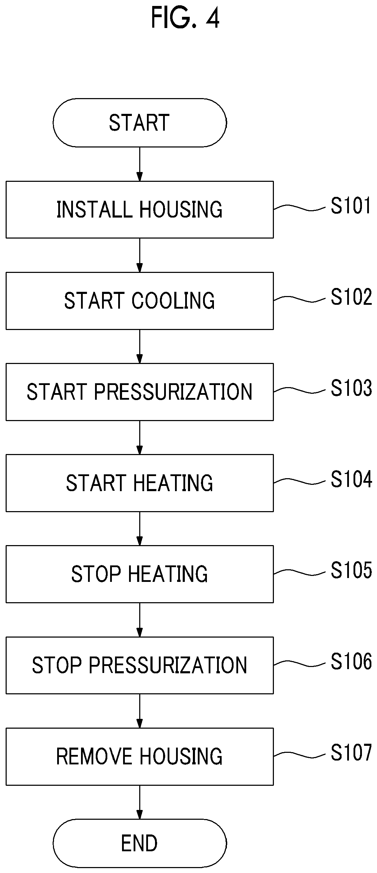

Next, a fusion method that is performed by using the fusion device 100 of the present embodiment will be described with reference to Fig. 4. Fig. 4 is a flowchart showing a fusion method according to the embodiment.

In step S101, the housing 30 of the fusion device 100 is installed at a desired position on the composite material 200 that overlaps the composite material 300 provided on the installation surface Su.

In step S102, a cooling medium is caused to flow through the cooling pipe 20 disposed in the housing 30 to start the cooling of the pressurization surface 31 and the cooling of the upper surface 200a of the composite material 200 via the pressurization surface 31. Note that the cooling of the housing 30 that is performed by means of the cooling pipe 20 may be started before the housing 30 is installed on the composite material 200 in step S101.

In step S103, an operation of bringing the pressurizing mechanism 40 into contact with the housing 30 and pressurizing the composite material 200 toward the installation surface Su along the pressurizing direction PD is started.

In step S104, supply of an alternating current from the alternating power supply (not shown) to the inductive coil 10 is started to start the heating of the composite material 200 and the composite material 300 that is performed by means of the inductive coil 10.

In step S105, the supply of the alternating current to the inductive coil 10 is stopped when the heating of the composite material 200 and the composite material 300 that is performed by means of the inductive coil 10 is performed for a sufficient time to fuse the composite material 200 and the composite material 300 with each other. Accordingly, the heating of the composite material 200 and the composite material 300 that is performed by the inductive coil 10 is stopped.

In step S106, when a predetermined time required for the temperature of the thermoplastic resins of the composite material 200 and the composite material 300 to be lowered to a temperature sufficiently lower than the melting point thereof elapses after the heating of the composite material 200 and the composite material 300 that is performed by the inductive coil 10 is stopped, pressurization performed by the pressurizing mechanism 40 is stopped.

In step S107, since the fusion of the composite material 200 and the composite material 300 at a position where the housing 30 is installed is finished, the housing 30 is removed from the position. After the housing 30 is removed, processing in step S101 is started again and the housing 30 is installed at another position where fusion has not been performed. By repeating the above-described processing, fusion can be performed on desired positions of the composite material 200 and the composite material 300.

### [Second Embodiment]

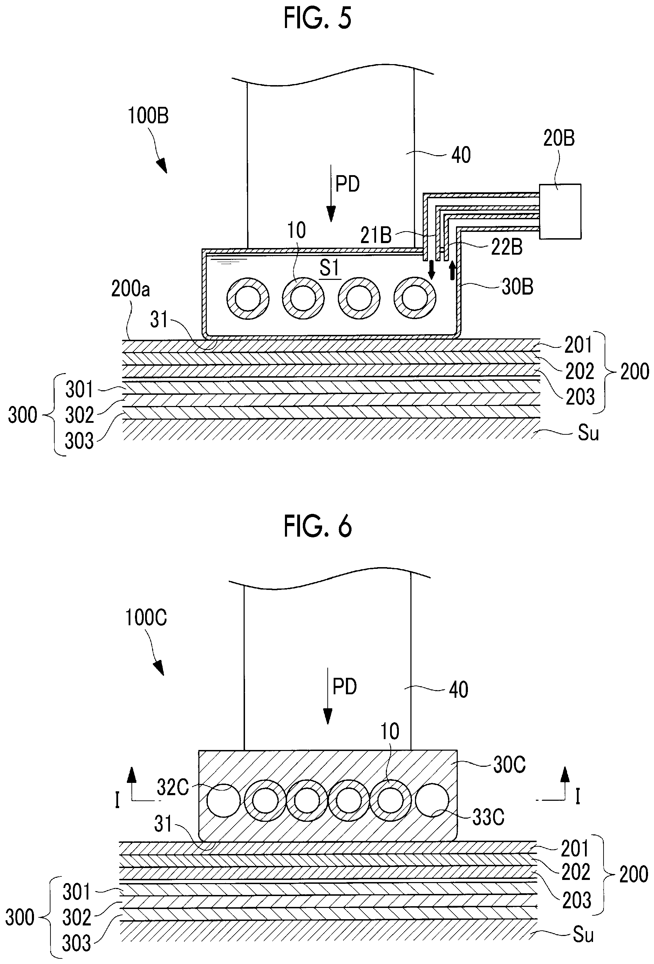

Next, a fusion device 100B according to a second embodiment of the present disclosure will be described with reference to the drawings. Fig. 5 is a vertical sectional view showing the fusion device 100B according to the present embodiment. The present embodiment is a modification example of the first embodiment, is the same as the first embodiment except for a case particularly described below, and the description thereof will be omitted below.

In the fusion device 100 of the first embodiment, the cooling medium is caused to flow through the cooling pipe 20 disposed inside the housing 30 formed of a block-shaped resin material so as to cool the upper surface 200a of the composite material 200 via the pressurization surface 31 of the housing 30. On the other hand, in the case of the fusion device 100B of the present embodiment, the cooling medium is supplied into and discharged from a space inside the housing 30B formed in a box shape so as to cool the upper surface 200a of the composite material 200 via the pressurization surface 31 of the housing 30.

As shown in Fig. 5, the housing 30B of the fusion device 100B of the present embodiment is formed in a box shape such that a space S1 in which the inductive coil 10 is disposed is formed therein. In addition, the fusion device 100B includes a cooling unit 20B that causes the cooling medium to flow into an inlet 21B communicating with the space S1 and causes the cooling medium to be discharged through an outlet 22B communicating with the space S1.

The cooling unit 20B circulates the cooling medium by supplying the cooling medium into the space S1 through the inlet 21B after adjusting the temperature of the cooling medium discharged through the outlet 22B to a predetermined temperature. According to the present embodiment, since the cooling medium circulates in the box-shaped housing 30B, the housing 30B can be maintained at a desired temperature. Therefore, the upper surface 200a of the composite material 200 can be maintained at a desired temperature via the pressurization surface 31 of the housing 30B.

### [Third Embodiment]

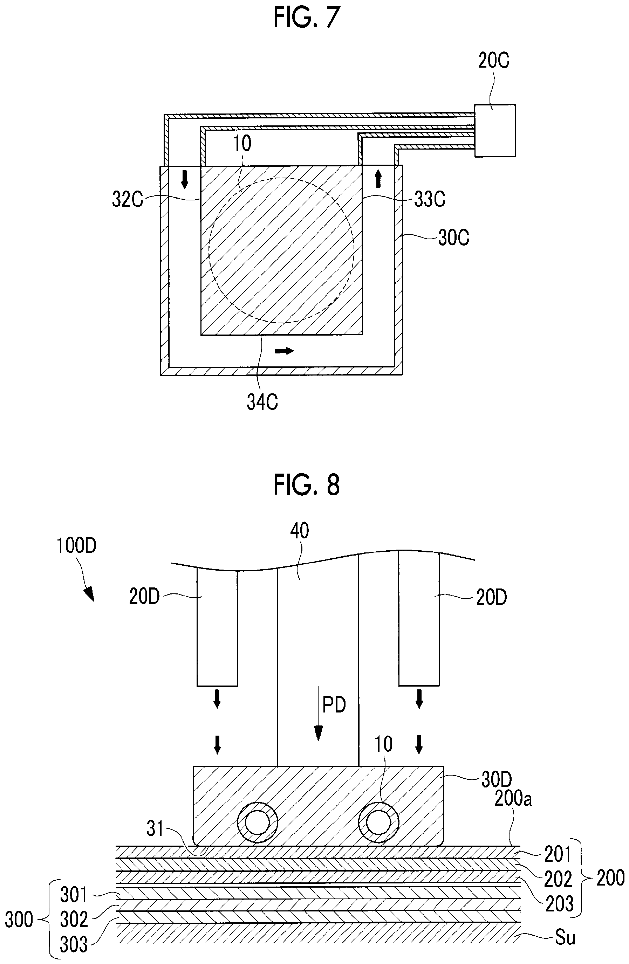

Next, a fusion device 100C according to a third embodiment of the present disclosure will be described with reference to the drawings. Fig. 6 is a vertical sectional view showing the fusion device 100C according to the present embodiment. Fig. 7 is a cross-sectional view taken along line I-I which shows the fusion device 100C shown in Fig. 6 as seen along arrows. The present embodiment is a modification example of the first embodiment, is the same as the first embodiment except for a case particularly described below, and the description thereof will be omitted below.

In the fusion device 100 of the first embodiment, the cooling medium is caused to flow through the cooling pipe 20 disposed inside the housing 30 formed of a block-shaped resin material so as to cool the upper surface 200a of the composite material 200 via the pressurization surface 31 of the housing 30. On the other hand, in the case of the fusion device 100C of the present embodiment, a communication flow path 34C is provided in the housing 30C formed of a block-shaped resin material and the cooling medium is caused to flow through the communication flow path 34C so as to cool the upper surface 200a of the composite material 200 via the pressurization surface 31 of the housing 30C.

As shown in Fig. 6, the housing 30C of the fusion device 100C of the present embodiment is provided with an inlet 32C into which the cooling medium flows and an outlet 33C through which the cooling medium is discharged. As shown in Fig. 7, the housing 30C is further provided with the communication flow path 34C through which the inlet 32C and the outlet 33C communicate with each other.

The fusion device 100C includes a cooling unit 20C that causes the cooling medium to flow into the inlet 32C and causes the cooling medium to be discharged through the outlet 33C. The cooling unit 20C circulates the cooling medium in the housing 30C by supplying the cooling medium into the communication flow path 34C through the inlet 32C after adjusting the temperature of the cooling medium discharged through the outlet 33C to a predetermined temperature. According to the present embodiment, since the cooling medium circulates in the housing 30C formed of a block-shaped resin material, the housing 30C can be maintained at a desired temperature. Therefore, the upper surface 200a of the composite material 200 can be maintained at a desired temperature via the pressurization surface 31 of the housing 30C.

### [Fourth Embodiment]

Next, a fusion device 100D according to a fourth embodiment of the present disclosure will be described with reference to the drawings. Fig. 8 is a vertical sectional view showing the fusion device 100D according to the present embodiment. The present embodiment is a modification example of the first embodiment, is the same as the first embodiment except for a case particularly described below, and the description thereof will be omitted below.

In the fusion device 100 of the first embodiment, the cooling medium is caused to flow through the cooling pipe 20 disposed inside the housing 30 formed of a block-shaped resin material so as to cool the upper surface 200a of the composite material 200 via the pressurization surface 31 of the housing 30. On the other hand, in the case of the fusion device 100D of the present embodiment, a cooling gas is jetted toward a housing 30D to cool the pressurization surface 31.

As shown in Fig. 8, the fusion device 100D of the present embodiment includes a jetting mechanism (a cooling unit) 20D that jets a cooling gas (for example, air) toward an upper surface of the housing 30D. The jetting mechanism 20D jets the cooling gas toward the upper surface of the housing 30D to lower the temperature of the upper surface of the housing 30D formed of a block-shaped resin material. In a case where the temperature of the upper surface of the housing 30D is lowered, the temperature is transmitted to the pressurization surface 31, so that the pressurization surface 31 is cooled. In addition, the upper surface 200a of the composite material 200 in contact with the pressurization surface 31 is also cooled.

According to the present embodiment, the housing 30D is a relatively simple mechanism provided with only the inductive coil 10 disposed therein and the pressurization surface 31 of the housing 30D and the upper surface 200a of the composite material 200 can be cooled by means of the jetting mechanism 20D provided separately from the housing 30.

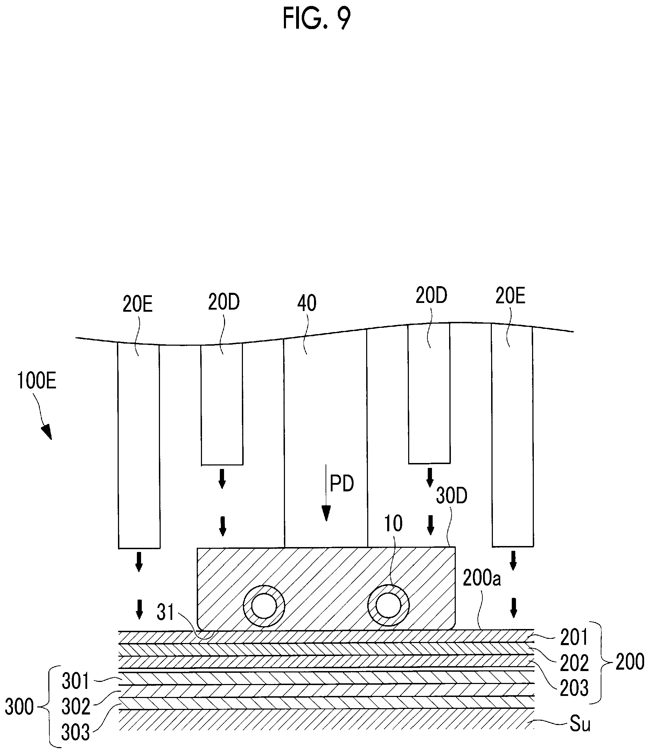

As a modification example of the fusion device 100D of the present embodiment, a fusion device 100E as shown in Fig. 9 may also be adopted. The fusion device 100E shown in Fig. 9 includes a jetting mechanism (a second cooling mechanism) 20E in addition to the jetting mechanism (a first cooling mechanism) 20D. The jetting mechanism 20E is a mechanism that jets the cooling gas toward an adjacent region adjacent to a contact region of the composite material 200 where the composite material 200 comes into contact with the pressurization surface 31, to cool the adjacent region.

### [Fifth Embodiment]

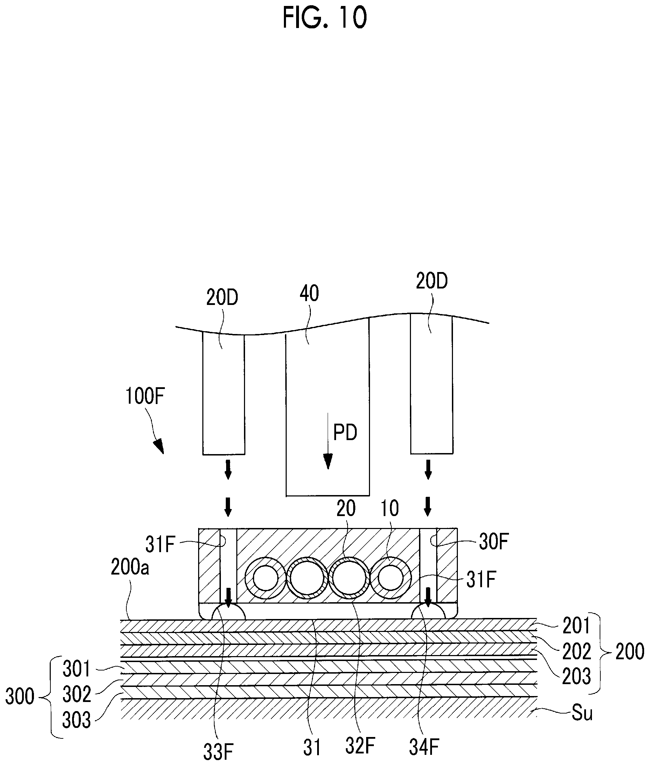

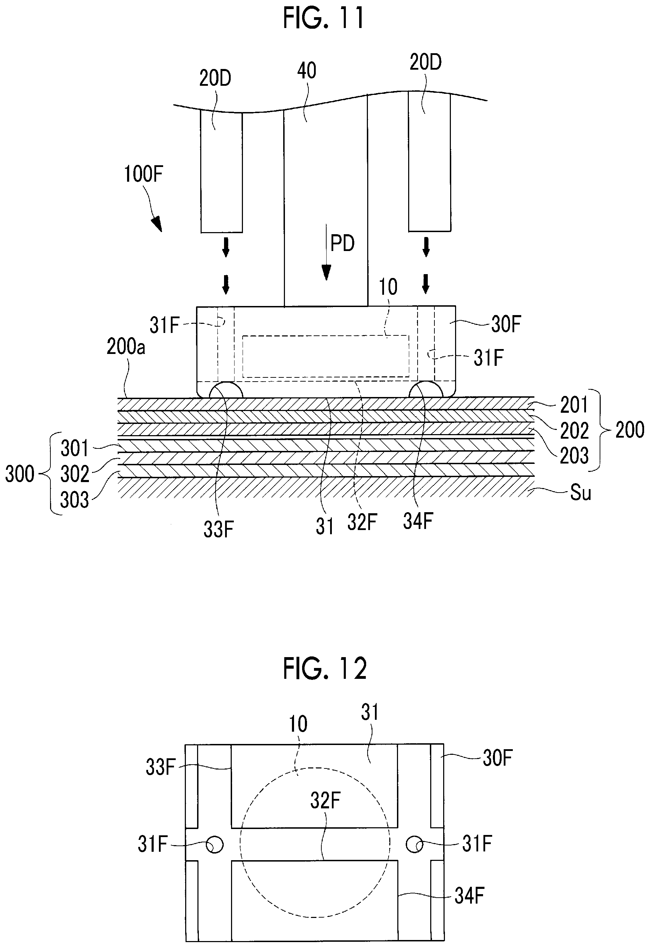

Next, a fusion device 100F according to a fifth embodiment of the present disclosure will be described with reference to the drawings. Fig. 10 is a vertical sectional view showing the fusion device 100F according to the present embodiment. Fig. 11 is a front view showing the fusion device 100F shown in Fig. 10. Fig. 12 is a view showing the fusion device 100F shown in Fig. 11 as seen from the pressurization surface 31 side. The present embodiment is a modification example of the fourth embodiment, is the same as the fourth embodiment except for a case particularly described below, and the description thereof will be omitted below.

In the present embodiment, flow paths through which a cooling gas jetted from the jetting mechanism 20D flows are provided in a housing 30F formed of a block-shaped resin material, so that the upper surface 200a of the composite material 200 can be cooled at the position of the pressurization surface 31. In addition, in the present embodiment, the cooling pipe 20 in the first embodiment is provided in the housing 30F to further improve the cooling effect.

As shown in Figs. 10 and 11, a pair of introduction flow paths 31F, a communication flow path 32F, a communication flow path 33F, and a communication flow path 34F are formed in the housing 30F of the present embodiment. The cooling gas introduced from the jetting mechanism 20D into the pair of introduction flow paths 31F cools the upper surface 200a of the composite material 200 when passing through the communication flow path 32F, the communication flow path 33F, and the communication flow path 34F.

As shown in Fig. 10, the pair of introduction flow paths 31F is a pair of flow paths that guides the cooling gas jetted from the jetting mechanism 20D and extends in a vertical direction. Lower ends of the pair of introduction flow paths 31F communicate with respective flow paths at a position at which the communication flow path 32F and the communication flow path 33F intersect each other and a position at which the communication flow path 32F and the communication flow path 33F intersect each other.

As shown in Fig. 10, the communication flow path 32F is a flow path that communicates with the introduction flow paths 31F, extends in a horizontal direction, and penetrates the housing 30F. Through the communication flow path 32F, a cooling gas introduced from the introduction flow paths 31F flows in the horizontal direction along the upper surface 200a of the composite material 200.

As shown in Figs. 10 and 11, the communication flow path 33F is a flow path that communicates with the introduction flow path 31F and extends in a horizontal direction. As shown in Fig. 12, the communication flow path 33F is a flow path that extends in a direction orthogonal to the communication flow path 32F.

As shown in Figs. 10 and 11, the communication flow path 34F is a flow path that communicates with the introduction flow path 31F and extends in the horizontal direction. As shown in Fig. 12, the communication flow path 34F is a flow path that extends in the direction orthogonal to the communication flow path 32F.

As shown in Fig. 12, a surface of the housing 30F of the present embodiment that comes into contact with the upper surface 200a of the composite material 200 includes a region in which the communication flow paths 32F, 33F, and 34F are formed and that does not come into contact with the upper surface 200a of the composite material 200 and a region in which the communication flow paths 32F, 33F, and 34F are not formed and that comes into contact with the upper surface 200a of the composite material 200. The region that comes into contact with the upper surface 200a of the composite material 200 is the pressurization surface 31.

According to the fusion device 100F of the present embodiment, it is possible to protect the upper surface 200a of the composite material 200 close to the inductive coil 10 from damage caused by heat by appropriately cooling a region adjacent to the pressurization surface 31 while pressurizing, by means of the pressurization surface 31 of the housing 30F, a region of the composite material 200 that is heated by the inductive coil 10.

The fusion device described in the above-described embodiment is understood as follows, for example.

A fusion device (100) according to the present disclosure fuses a first composite material (200) and a second composite material (300), each of which includes a conductive reinforcement fiber and a thermoplastic resin, with each other and the fusion device includes an inductive coil (10) that is disposed close to the first composite material, generates an electric current in the reinforcement fiber included in the first composite material to cause the first composite material to generate heat, and generates an electric current in the reinforcement fiber included in the second composite material to cause the second composite material to generate heat, a housing (30) that includes a pressurization surface (31) disposed between the inductive coil and the first composite material in a state of being in contact with the first composite material, and a cooling unit (20) that cools the pressurization surface.

According to the fusion device of the present disclosure, the first composite material is cooled via the pressurization surface that is disposed in a state of being in contact with the first composite material disposed close to the inductive coil. Since a cooling gas such as air does not need to be provided between the inductive coil and a surface of the first composite material, the inductive coil can be disposed at a position close to the surface of the first composite material. Accordingly, a current value required to increase the temperature of a fusion position between the first composite material and the second composite material to a temperature equal to or higher than the melting point of the thermoplastic resins is not high. Therefore, it is possible to protect a surface of a composite material close to the inductive coil from damage caused by heat without increasing electric power required for fusion.

In addition, according to the fusion device of the present disclosure, the pressurization surface is disposed between the inductive coil and the first composite material in a state of being in contact with the first composite material. Therefore, it is possible to achieve a favorable fusion state by pressurizing the first composite material via the pressurization surface so as to pressurize a heated portion at the same time the first composite material is heated by the inductive coil.

In the fusion device of the present disclosure, the cooling unit is a pipe body through which a cooling medium flows and the housing is formed of a block-shaped resin material in which the inductive coil and the pipe body are disposed.

According to the fusion device of the present disclosure, the housing formed of the block-shaped resin material is cooled by the cooling medium flowing through the pipe body, so that the pressurization surface which is a portion of the housing is cooled. Accordingly, the first composite that is in contact with the pressurization surface can be appropriately cooled.

In the fusion device, the pipe body is disposed at a position closer to the pressurization surface than the inductive coil.

Accordingly, the pipe body is in a state of being close to the pressurization surface and thus the efficiency of cooling that is performed with respect to the pressurization surface via the cooling medium flowing through the pipe body and cooling that is performed with respect to the first composite material being in contact with the pressurization surface is improved.

In the fusion device, the pipe body is disposed at a position such that a distance from the pressurization surface to the inductive coil and a distance from the pressurization surface to the pipe body are the same as each other.

Accordingly, it is possible to achieve both of the heating performance of the inductive coil heating the first composite material and the second composite material and the cooling performance of the pipe body cooling an upper surface of the first composite material via the pressurization surface.

In the fusion device of the present disclosure, the housing is formed in a box shape such that a space (S1) in which the inductive coil is disposed is formed therein and the cooling unit is a mechanism that causes a cooling medium to flow into an inlet (21B) communicating with the space and causes the cooling medium to be discharged through an outlet (22B) communicating with the space.

According to the fusion device of the present disclosure, the box-shaped housing forming the space in which the inductive coil is disposed is cooled by the cooling medium flowing through the space, so that the pressurization surface which is a portion of the housing is cooled. Accordingly, the first composite that is in contact with the pressurization surface can be appropriately cooled.

In the fusion device of the present disclosure, the housing is formed of a block-shaped resin material in which the inductive coil is installed and that includes an inlet (32C) into which a cooling medium flows, an outlet (33C) through which the cooling medium is discharged, and a communication flow path (34C) through which the inlet and the outlet communicate with each other and the cooling unit is a mechanism that causes the cooling medium to flow into the inlet and causes the cooling medium to be discharged through the outlet.

According to the fusion device of the present disclosure, the housing formed of the block-shaped resin material is cooled by the cooling medium flowing through the communication flow path included in the housing, so that the pressurization surface which is a portion of the housing is cooled. Accordingly, the first composite that is in contact with the pressurization surface can be appropriately cooled.

In the fusion device of the present disclosure, the cooling unit is a mechanism that jets a cooling gas toward the housing to cool the pressurization surface.

According to the fusion device of the present disclosure, the cooling gas is jetted toward the housing so that the pressurization surface which is a portion of the housing is cooled and thus it is possible to appropriately cool the first composite material in contact with the pressurization surface.

In the fusion device, the cooling unit includes a first cooling mechanism (20D) that jets the cooling gas toward the housing to cool the pressurization surface and a second cooling mechanism (20E) that jets the cooling gas toward an adjacent region adjacent to a contact region of the first composite material where the first composite material comes into contact with the pressurization surface, to cool the adjacent region.

According to the fusion device of the present disclosure, the contact region of the first composite material where the first composite material comes into contact with the pressurization surface is cooled by the first cooling mechanism and the adjacent region adjacent to the contact region is cooled by the second cooling mechanism.

In the fusion device, the housing is formed of a block-shaped resin material in which the inductive coil is disposed and an introduction flow path (31F) that guides the cooling gas jetted from the cooling unit and a communication flow path (32F) through which the cooling gas introduced from the introduction flow path flows along the first composite material disposed in a state of being in contact with the pressurization surface are formed in the housing.

According to the fusion device of the present disclosure, it is possible to protect the upper surface of the first composite material close to the inductive coil from damage caused by heat by appropriately cooling a region adjacent to the pressurization surface while pressurizing, by means of the pressurization surface of the housing, a region of the first composite material that is heated by the inductive coil.

The fusion method described in the above-described embodiment is understood as follows, for example.

A fusion method according to the present disclosure is a fusion method of fusing a first composite material and a second composite material, each of which includes a conductive reinforcement fiber and a thermoplastic resin, with each other, the method including a cooling step of cooling a housing that includes a pressurization surface disposed in a state of being in contact with the first composite material; a pressurizing step of pressurizing the first composite material via the pressurization surface in a state where the pressurization surface is in contact with the first composite material; and a heating step of driving an inductive coil that is disposed with the pressurization surface interposed between the first composite material and the inductive coil, generating an electric current in the reinforcement fiber included in the first composite material to cause the first composite material to generate heat, and generating an electric current in the reinforcement fiber included in the second composite material to heat the second composite material after the pressurization surface is cooled in the cooling step and the first composite material is pressurized in the pressurizing step.

According to the fusion method of the present disclosure, the first composite material is cooled via the pressurization surface that is disposed in a state of being in contact with the first composite material disposed close to the inductive coil. Since a cooling gas such as air does not need to be provided between the inductive coil and a surface of the first composite material, the inductive coil can be disposed at a position close to the surface of the first composite material. Accordingly, a current value required to increase the temperature of a fusion position between the first composite material and the second composite material to a temperature equal to or higher than the melting point of the thermoplastic resins is not high. Therefore, it is possible to protect a surface of a composite material close to the inductive coil from damage caused by heat without increasing electric power required for fusion.

In addition, according to the fusion method of the present disclosure, the pressurization surface is disposed between the inductive coil and the first composite material in a state of being in contact with the first composite material. Therefore, it is possible to achieve a favorable fusion state by pressurizing the first composite material via the pressurization surface in the pressurizing step so as to pressurize a heated portion at the same time the first composite material is heated by the inductive coil. Reference Signs List

10: inductive coil
20: cooling pipe (cooling unit)
20B, 20C: cooling unit
20D: jetting mechanism (first cooling mechanism)
20E: jetting mechanism (second cooling mechanism)
21B: inlet
22B: outlet
30, 30A, 30B, 30C, 30D, 30F: housing
31: pressurization surface
31F: introduction flow path
32C: inlet
32F, 33F, 34F: communication flow path
33C: outlet
34C: communication flow path
40: pressurizing mechanism
100, 100A, 100B, 100C, 100D, 100E, 100F: fusion device
200: composite material
200a: upper surface
201, 202, 203: composite
300: composite material
301, 302, 303: composite
PD: pressurizing direction
Su: installation surface
S1: space

## Claims

1. A fusion device which fuses a first composite material and a second composite material, each of which includes a conductive reinforcement fiber and a thermoplastic resin, with each other, the device comprising:
an inductive coil that is disposed close to the first composite material, generates an electric current in the reinforcement fiber included in the first composite material to cause the first composite material to generate heat, and generates an electric current in the reinforcement fiber included in the second composite material to cause the second composite material to generate heat;
a housing that includes a pressurization surface disposed between the inductive coil and the first composite material in a state of being in contact with the first composite material; and
a cooling unit that cools the pressurization surface.

2. The fusion device according to claim 1,
wherein the cooling unit is a pipe body through which a cooling medium flows, and
the housing is formed of a block-shaped resin material in which the inductive coil and the pipe body are disposed.

3. The fusion device according to claim 2,
wherein the pipe body is disposed at a position closer to the pressurization surface than the inductive coil.

4. The fusion device according to claim 2,
wherein the pipe body is disposed at a position such that a distance from the pressurization surface to the inductive coil and a distance from the pressurization surface to the pipe body are the same as each other.

5. The fusion device according to claim 1,
wherein the housing is formed in a box shape such that a space in which the inductive coil is disposed is formed therein, and
the cooling unit is a mechanism that causes a cooling medium to flow into an inlet communicating with the space and causes the cooling medium to be discharged through an outlet communicating with the space.

6. The fusion device according to claim 1,
wherein the housing is formed of a block-shaped resin material in which the inductive coil is installed and that includes an inlet into which a cooling medium flows, an outlet through which the cooling medium is discharged, and a communication flow path through which the inlet and the outlet communicate with each other, and
the cooling unit is a mechanism that causes the cooling medium to flow into the inlet and causes the cooling medium to be discharged through the outlet.

7. The fusion device according to claim 1,
wherein the cooling unit is a mechanism that jets a cooling gas toward the housing to cool the pressurization surface.

8. The fusion device according to claim 7,
wherein the cooling unit includes a first cooling mechanism that jets the cooling gas toward the housing to cool the pressurization surface and a second cooling mechanism that jets the cooling gas toward an adjacent region adjacent to a contact region of the first composite material where the first composite material comes into contact with the pressurization surface, to cool the adjacent region.

9. The fusion device according to claim 7,
wherein the housing is formed of a block-shaped resin material in which the inductive coil is disposed, and
an introduction flow path that guides the cooling gas jetted from the cooling unit and a communication flow path through which the cooling gas introduced from the introduction flow path flows along the first composite material disposed in a state of being in contact with the pressurization surface are formed in the housing.

10. A fusion method of fusing a first composite material and a second composite material, each of which includes a conductive reinforcement fiber and a thermoplastic resin, with each other, the method comprising:
a cooling step of cooling a housing that includes a pressurization surface disposed in a state of being in contact with the first composite material;
a pressurizing step of pressurizing the first composite material via the pressurization surface in a state where the pressurization surface is in contact with the first composite material; and
a heating step of driving an inductive coil that is disposed with the pressurization surface interposed between the first composite material and the inductive coil, generating an electric current in the reinforcement fiber included in the first composite material to cause the first composite material to generate heat, and generating an electric current in the reinforcement fiber included in the second composite material to heat the second composite material after the pressurization surface is cooled in the cooling step and the first composite material is pressurized in the pressurizing step.
